(19) **Europäisches Patentamt / European Patent Office / Office européen des brevets**

(11) **EP 2 388 757 B1**

(12) **EUROPEAN PATENT SPECIFICATION**

(45) Date of publication and mention
of the grant of the patent:
**16.08.2017 Bulletin 2017/33**

(51) Int Cl.:
*G08G 1/16* (2006.01)          *B60T 7/02* (2006.01)
*B60T 7/12* (2006.01)          *B60T 7/00* (2006.01)

(21) Application number: **10162945.9**

(22) Date of filing: **17.05.2010**

(54) **Forward collision risk reduction**

Frontalaufprallrisikoverringerung

Réduction du risque de collision frontale

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**23.11.2011 Bulletin 2011/47**

(73) Proprietor: **Volvo Car Corporation**
**405 31 Göteborg (SE)**

(72) Inventors:
• **Bengtsson, Mattias**
**42738, Billdal (SE)**

• **Eidehall, Andreas**
**43138, Mölndal (SE)**
• **Gassilewski, Martin**
**42470, Olofstorp (SE)**
• **Andreasson, Martin**
**42349, Torslanda (SE)**

(74) Representative: **Volvo Car Corporation**
**405 31 Göteborg (SE)**

(56) References cited:
**DE-A1-102008 045 481    GB-A- 2 331 136
US-A- 5 492 397          US-A1- 2006 097 570
US-B1- 6 473 681**

**Description**

The present invention relates to a method for reducing the risk of a forward collision between a vehicle and a foreign object, in accordance with the preamble of claim 1.

Further, the present invention relates to a computer program product implemented to execute all the steps of the above method; an electronic control unit comprising such a computer program product; an automotive forward collision risk reduction system comprising such an electronic control unit and an automotive vehicle comprising such a system. Moreover, the present invention relates to a method of upgrading an automotive vehicle forward collision risk reduction system.

BACKGROUND OF THE INVENTION

A current trend in the automotive industry is to introduce active safety systems for avoiding or mitigating collisions. Such a system generally estimates the state of objects ahead of a vehicle, for instance by using a sensor. Moreover the system generally, based on the estimated state of the object, determines if any action needs to be taken, e.g. issuing a warning to the driver or initiating autonomous braking of the vehicle.

Although a system as described hereinabove is useful for reducing the risk of a forward collision, such a system may also have some disadvantages. For instance, there may be a risk that the state of the object is incorrectly assessed. An incorrect assessment may result in the system issuing an unnecessary collision risk reduction task, such as a warning and/or autonomous braking. Unnecessary autonomous braking may result in a potentially dangerous traffic situation, for instance it may result in an increased risk that a following vehicle will hit the hosting vehicle from behind.

As may be realized, there is a need for improvement of the active safety systems for avoiding or mitigating collisions between a vehicle and a foreign object.

US 2006/097570 A1 discloses a method and a device for triggering an automatic emergency braking process of a vehicle, in particular of a truck. Said device provides an assistance function for avoiding a rear end collision of the vehicle with a vehicle traveling in front and/or for reducing the consequences of an accident if a rear end collision is unavoidable, with a driver warning being triggered if a predefined warning condition is fulfilled. The fulfillment of the warning condition specifies that the automatic emergency braking process is to be triggered after the expiry of a predefined warning time period in order to avoid the vehicle having a rear end collision with the vehicle traveling in front. The purpose of this process is to attain (after the automatic emergency braking process has finished) a predefined target relative speed and/or a predefined target safety distance between the vehicle and the vehicle traveling in front. Any further reduction in the vehicle's own speed is unnecessary and constitutes an additional hazard, particularly for vehicles traveling behind. US 6 473 681 B1 discloses a process for shortening the braking distance of a vehicle equipped with a brake servo unit which during a standard braking action is only triggered by the brake pedal pressure caused by the driver and in case of a critical driving situation is so triggered by a control device that in comparison to the standard braking action an increased amplification factor is set at the brake servo unit. The process distinguishes itself by the fact that a danger potential is determined, stating the probability that the vehicle to be braked will be involved in an accident and that the increase of the amplification factor is controlled in accordance with the danger potential.

DE 10 2008 045481 A1 discloses a method involving triggering a driver warning by an evaluation unit, when a predetermined warning condition is fulfilled. The fulfilling of the warning condition indicates that the automatic emergency brake action is to be triggered based on momentary driving conditions of a vehicle and a predetermined emergency brake delay during a course of a warning time duration. The haptic driver warning perceived for a driver of the vehicle is implemented in the form of partial brake actions of the vehicle with a predetermined, continuous increasing partial brake delay. An independent claim is also included to a device for implementing the method for triggering automatic emergency brake action of the vehicle.

US 5 492 397 A discloses a method for terminating an automatic braking process to improve an automatic braking process by assuring that reliable termination of the braking process always takes place. Braking-off criteria, which are independent of the actuation force of the brake pedal, are provided for the automatic braking process. The variables relating to the dynamics of vehicle movement or the activation time of the automatic braking process, if appropriate also as a function of variables relating to dynamics of vehicle movement, are used as the braking-off criteria. Thus, automatic braking process is terminated as a function of vehicle behaviour. In addition, the gradient of the braking pressure is determined as a function of the activation time and/or as a function of the switch-off criteria when the automatic braking process is terminated.

SUMMARY OF THE INVENTION

One object of the invention is to reduce or ameliorate at least one of the disadvantages of the prior art systems and/or methods, or to provide a useful alternative.

This object is achieved by a method for reducing the risk of a forward collision according to claim 1.

As such, the present invention relates to method for reducing the risk of a forward collision between a vehicle and a foreign object. The method comprises the steps of:

- establishing the presence of the foreign object in front of the vehicle;
- initiating a collision risk reduction task resulting in a speed reduction of the vehicle, and
- terminating said collision risk reduction task when said speed reduction exceeds a predetermined threshold value.

By a method according to the above, it is possible to obtain appropriate forward collision risk reduction characteristics for a vehicle and at the same time, as compared to prior art systems and/or methods, reduce the risk for rear collisions for the vehicle. The method according to the present invention provides the above characteristics without necessarily having to increase the reliability, such as the redundancy, of the components forming a part of, or providing input to, the vehicle forward collision risk reduction system executing the method of the present invention. Consequently, the above characteristics may be obtained by simply modifying the software, not necessarily the hardware, of the system which in turn results in that a system executing the method of the invention may be produced cost efficiently.

Moreover, prior art forward collision risk reduction systems may in some cases be updated to be able to execute the method of the present invention by simply updating the software of the product, which update generally is a cost efficient way of increasing the safety of a vehicle.

According to the present invention, the method may further comprise the steps of:

- determining if a driver of the vehicle requests a deceleration of the vehicle, and
- if yes, determining a required deceleration of the vehicle.

The establishment of the presence of the foreign object of a vehicle is generally performed by means of at least one component of a forward collision risk reduction system, such as a sensor, and there is always a risk that such a component will perform an incorrect assessment as regards the presence and/or position of the foreign object in relation to the vehicle hosting the system. By utilizing the driver's deceleration request as an additional input when determining a required deceleration of the vehicle, the required deceleration may be determined by means of input from two independent sources, namely from at least one component of the system and as the driver himself. The use of two independent sources significantly reduces the risk for obtaining an inadvertently large deceleration of the vehicle since the risk that the at least one component and the driver makes the same, or at least similar, incorrect assessment as regards the foreign object is smaller than the individual risk for each one of the two sources.

According to the present invention, the method may further comprise the steps of:

- determining if the risk is reduced to a level below a predetermined limit after the collision risk reduction task has been terminated;

  ∘ if not, waiting for a predetermined delay time, and
  ∘ initiating a risk reduction method according to any one of the above embodiments.

By utilizing the above method steps, the effect of an incorrect assessment of the presence and/or position of a foreign object in relation to the vehicle may be reduced. This is since the above method steps provide that in order to impart the vehicle a speed reduction the magnitude of which exceeds the above-mentioned threshold value at least two foreign object assessments are required: one before and one after the predetermined delay time.

Since the risk that the previously discussed at least one component of the system makes the same, or at least similar, incorrect assessment at two separate time instants is smaller than the individual risk for one time instant, the risk of obtaining an inadvertent speed reduction exceeding the threshold value is significantly reduced as compared to a method wherein only one assessment of the foreign object is required for imparting the vehicle such as large speed reduction.

A second aspect of the present invention relates to a computer program product comprising a computer program containing computer program code executable in a computer or a processor to implement all the steps of a method according to the present invention. The product may preferably be stored on a computer-readable medium or transportable through a carrier wave.

A third aspect of the present invention relates to an electronic control unit comprising a computer program product according to the second aspect of the present invention and arranged to execute a method according to the first aspect of the present invention.

A fourth aspect of the present invention relates to an automotive vehicle forward collision risk reduction system comprising an electronic control unit according to the third aspect of the present invention.

A fifth aspect of the present invention relates to a method of upgrading an automotive vehicle forward collision risk reduction system by executing the computer program product according to the second aspect of the present invention.

BRIEF DESCRIPTION OF THE DRAWINGS

The present invention will hereinafter be explained in greater detail by means of nonlimiting examples and with reference to the appended drawings in which:

Fig. 1     illustrates a vehicle equipped with a system of the present invention;

Fig. 2     illustrates a traffic situation involving the Fig. 1 vehicle and a pedestrian;

Fig. 3     is a diagram illustrating different decelerations of a vehicle;

Fig. 4     illustrates the speed as a function of time for a vehicle when a method according to the present invention is used;

Fig. 5     illustrates the speed as a function of time for a vehicle when a method according to the present invention is used, and

Fig. 6     is a flow chart illustrating an embodiment of the method according to the present invention is used.

It should be noted that the appended drawings are not necessarily drawn to scale and that the dimensions of some features of the present invention may have been exaggerated for the sake of clarity.

DETAILED DESCRIPTION OF PREFERRED EMBODIMENTS

The invention will, in the following, be exemplified by embodiments. It is to be understood, however, that the embodiments are included in order to explain principles of the invention and not to limit the scope of the invention defined by the appended claims.

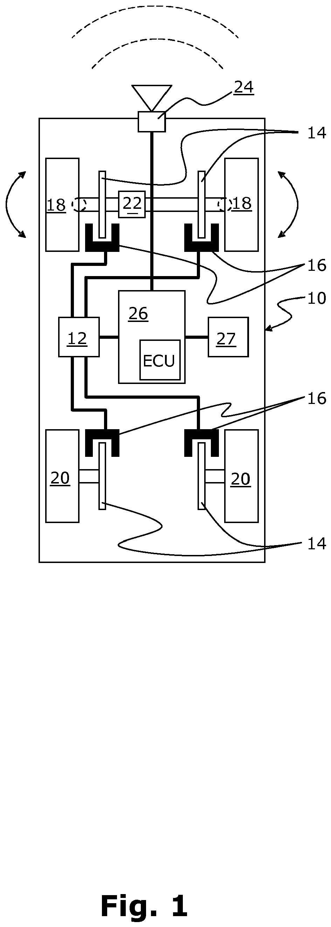

Figure 1 illustrates schematically a vehicle 10 hosting a system in accordance with the present invention. The host vehicle 10 has a braking system 12 such as an Antilock Brake System (ABS system), e.g. with brake discs 14 and appertaining calipers 16 associated with each of the front wheels 18 and rear wheels 20 of the host vehicle 10. However, the system of the present invention may of course be used on vehicles having other types braking systems, such as for instance a drum brake system (not shown).

The host vehicle 10 further usually has a power steering system 22, which is arranged to control the steering angle of the front wheels 18. The vehicle further comprises a sensor 24, such as a RADAR (RAdio Detection And Ranging), LIDAR (LIght Detection And Ranging), LASER (Light Amplification by Stimulated Emission of Radiation) or a camera based sensor. The sensor is mounted on the vehicle 10, preferably at the front end of the host vehicle 10, and is arranged to monitor the region in front of the host vehicle 10. The host vehicle 10 may also be provided with a plurality of sensors (not shown in Fig. 1) of the same type or even of different types.

The host vehicle 10 further comprises the system 26 of the invention. As may be gleaned from Fig. 1, the system 26 is preferably connected to the at least one sensor 24 as well as the braking system 12. Further, the system 26 is preferably connected to means 23 for issuing an acoustic and/or visual alarm actuated through an alarm actuator.

The system 26 according to the present invention is capable of executing a method for reducing the risk of a forward collision in accordance with the first aspect of the present invention. Preferably, the system 26 comprises an electronic control unit ECU comprising a computer program product containing computer program code executable in a computer or a processor to implement all the steps of a method according to the present invention.

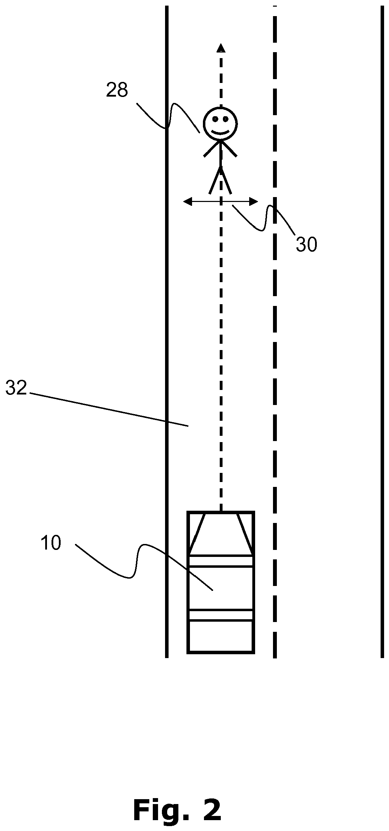

Fig. 2 illustrates the vehicle 10 in a traffic scenario in which the vehicle 10 is travelling towards a foreign object 28, in this case a pedestrian, which is stationary in the middle of a roadway 32. In order to reduce the risk of a forward collision between the vehicle 10 and the pedestrian 28, the system 26 is preferably adapted to execute a forward collision risk reduction method.

The above method comprises a step of establishing the presence of the foreign object 28 in front of the vehicle 10. Typically, this step may be performed by utilizing the sensor 24.

In order to determine if a collision between the vehicle 10 and the foreign object 28 is imminent and/or difficult to avoid, the method of the present invention preferably comprises a step of determining a braking threat number BTN. When determining the braking threat number BTN, a safety zone 30 of the foreign object 28 may firstly be established. Generally, the safety zone 30 of the foreign object 28 relates at least to the width, i.e. an extension in a direction substantially perpendicular to the forward direction of the hosting vehicle 10, of the foreign object 28 as well as a possible margin on at least one side, but preferably both sides, of the foreign object 28.

The safety zone 30 may be symmetrically distributed around the foreign object 28 such that the margin on one side of the object is substantially equal to the margin on the other side of the object. Optionally, the safety zone 30 may be asymmetrically distributed around the foreign object 28 such that the margin on one side of the object is greater than the margin on the other side of the object.

Moreover, the safety zone 30 may further comprise information as regards the position of the foreign object 28 with respect to the hosting vehicle 10. Furthermore, the safety zone 30 may comprise a margin in the forward direction of the hosting vehicle 30.

In other implementations of the step of determining a braking threat number BTN, the abovementioned margins may be set to zero such that the safety zone 30 is substantially equal to the width of the foreign object 28.

The braking threat number BTN is the deceleration $dec_{req}$ required in order to avoid entering the safety zone 30 divided by the maximum available deceleration $dec_{avail}$ for the vehicle 10, i.e. :

$$BTN = \frac{dec_{req}}{dec_{avail}} \qquad \text{(Eq. 1)}$$

As may be realized from Eq. 1, if BTN is equal to or greater than one, the vehicle 10 has no possibility to decelerate to zero speed before entering the safety zone 30. On the other hand, if BTN is less than one, it is possible to bring the vehicle 10 to a stop before it enters the safety zone 30. Purely by way of example, the maximum available deceleration $dec_{avail}$ for the vehicle 10 may be approximately 10 m/s$^2$.

In a similar vein as for the braking threat number BTN, the method of the present invention may comprise a step of determining a steering threat number STN. The steering threat number STN is defined as the minimum lateral acceleration required $a_{lat,req}$ in order to avoid entering the safety zone 30, on either the left or the right side, divided by the maximum available lateral acceleration $a_{lat,avail}$ for the vehicle 10, i.e. :

$$STN = \frac{a_{lat,req}}{a_{lat,avail}} \qquad \text{(Eq. 2)}$$

As may be realized from Eq. 2, if STN is equal to or greater than one, it will not be possible for a driver of the vehicle 10 to avoid entering the safety zone 30 by a steering manoeuvre. On the other hand, if STN is less than one, the driver may steer away from the zone 30. Purely by way of example, the maximum available lateral acceleration $a_{lat,avail}$ for the vehicle 10 may be approximately 7 m/s$^2$. It should be noted that the maximum available lateral acceleration may be dependent on *inter alia* the speed of the vehicle 10, viz a low speed of the vehicle 10 results in a reduction of the maximum available lateral acceleration $a_{lat,avail}$.

The method according to the second aspect of the present invention preferably uses at least one of the above discussed parameters, i.e. braking threat number BTN or steering threat number STN, when determining whether the vehicle 10 can avoid entering the safety zone 30 or not. In one embodiment of the present invention, the method comprises the steps of comparing the braking threat number BTN with a predetermined braking threat number threshold value $BTN_{max}$ and comparing the steering threat number STN with a predetermined steering threat number threshold value $STN_{max}$.

If, from the above comparison, it is concluded that the braking threat number BTN exceeds the predetermined braking threat number threshold value $BTN_{max}$ and/or that the steering threat number STN exceeds the predetermined steering threat number threshold value $STN_{max}$, a collision risk reduction task resulting in a speed reduction of the vehicle 10 is initiated as will be described further hereinbelow.

The braking threat number threshold value $BTN_{max}$ and the steering threat number threshold value $STN_{max}$ need not to be the same, but preferably each one of the aforementioned threshold values lies within the range of 0.5 - 1, preferably within the range of 0.8 - 1, most preferably within the range of 0.9 - 1. In embodiments of the method of the present invention, the braking threat number threshold value $BTN_{max}$ and/or the steering threat number threshold value $STN_{max}$ may be dependent on the speed of the vehicle 10. Purely by way of example, at least one, but preferably both, of the above threshold values may decrease as the speed of the vehicle 10 increases.

The method steps of determining at least one of the braking threat number BTN and/or the steering threat number STN preferably comprise a step of determining a reaction time $T_R$, or delay time, of the vehicle 10 and using this information when determining at least one of BTN or STN. In the presentation hereinbelow, the braking threat number BTN is used as an example, although it should be pointed out that the method steps below are equally applicable to the steering threat number STN.

The reaction time $T_R$ may comprise a portion as regards the reaction time of the vehicle 10, i.e. the time required for the vehicle 10 to assume a required risk reduction configuration, e.g. activating the braking system 12 of the vehicle 10. As such, the reaction time $T_R$ may comprise a portion regarding a delay time of the braking system 12.

Once the reaction time $T_R$ has been determined, the deceleration required $dec_{req}$ to avoid entering the safety zone may be determined using *inter alia* the reaction time $T_R$, the velocity of the vehicle 10 and the distance to the safety zone 30 as input.

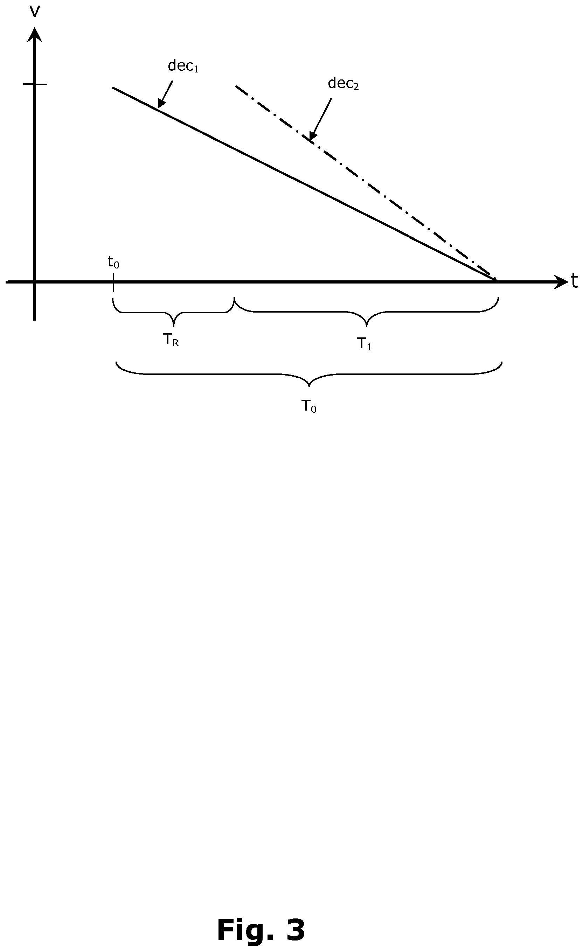

An example of how the above inputs may be used for determining the deceleration required $dec_{req}$ to avoid entering the safety zone is presented hereinbelow with reference to Fig. 3. Fig. 3 illustrates a traffic situation wherein the vehicle 10 is travelling with a certain speed $v_0$ at a certain time instant $t_0$ and is requested to stop within a first stop time $T_0$ in order to avoid entering a safety zone 30 of a foreign object 28. Purely by way of example, the sensor of the vehicle 24 could be used for determining a distance S to the safety zone 30 at the time instant $t_0$ and the first stop time $T_0$ may be calculated as the time needed to slow down the vehicle 10 to a stop before the vehicle has travelled the distance S, i.e. satisfying the following relation:

$$S = \int_{t_0}^{t_0+T_0} v(t)\,dt \qquad\qquad\qquad (\text{Eq. 3})$$

Assuming constant deceleration, i.e. an affine velocity reduction, the first stop time $T_0$ may be calculated as:

$$T_0 = \frac{2 \cdot S}{v_0} \qquad\qquad\qquad (\text{Eq. 4})$$

Using the value of first stop time $T_0$ as determined hereinabove, and also the previously discussed assumption of an affine velocity reduction, a first deceleration required $dec_1$ to avoid entering the safety zone may be calculated as

$$dec_1 = \frac{v_0}{T_0} \qquad\qquad\qquad (\text{Eq. 5})$$

An example of a first deceleration established in accordance with Eq. 5 is illustrated as a continuous line in Fig. 3.

However, since the driver of the vehicle 10 generally needs a reaction time $T_R$ before he/she initiates braking, i.e. the speed reduction operation, the stop time available for stopping the vehicle 10 is actually less than the first stop time $T_0$. Instead, the vehicle 10 has to stop within a second stop time $T_1$ which is the first stop time $T_0$ subtracted by the reaction time $T_R$. As such, again assuming a constant deceleration of the vehicle 10, a second deceleration required $dec_2$ to avoid entering the safety zone 30 may be calculated as

$$dec_2 = \frac{v_0}{T_0 - T_R} \qquad\qquad\qquad (\text{Eq. 6})$$

The second deceleration required $dec_2$ is preferably used as the deceleration required $dec_{req}$ when determining the braking threat number BTN.

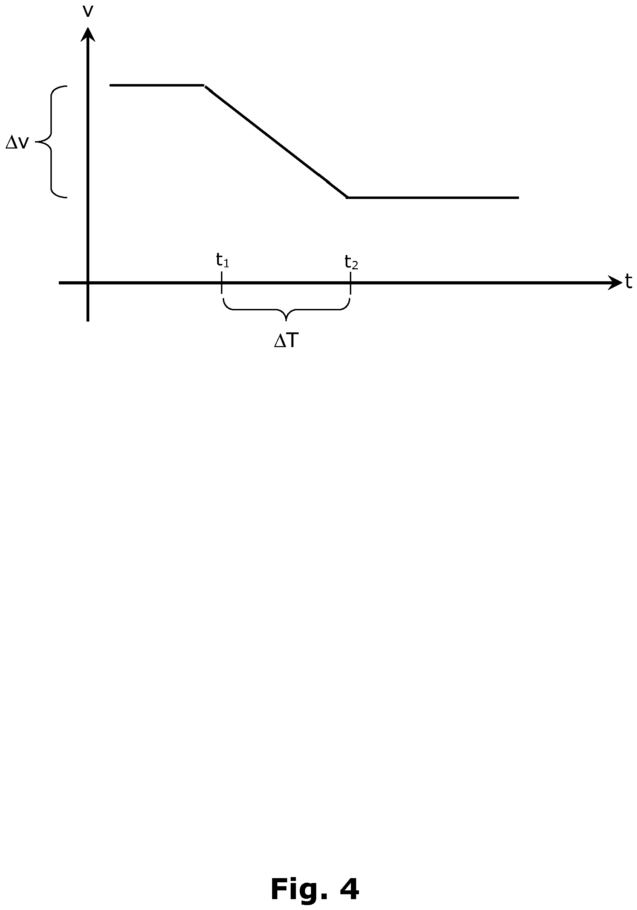

If, from the above method step or any other threat assessment step, it is concluded that a collision between the vehicle 10 and the foreign object 28 is imminent and/or difficult to avoid, the system initiates a collision risk reduction task resulting in a speed reduction of the vehicle 10. Typically, this task involves a step of actuating the braking system 12 such that an appropriate deceleration of the vehicle 10 is obtained. An example of such a scenario is indicated in Fig. 4 at the first time instant $t_1$.

During the deceleration imparted on the vehicle 10 the total speed reduction is monitored and the collision risk reduction task, in this case the autonomous braking of the vehicle 10, is terminated when the speed reduction exceeds a predetermined threshold value $\Delta v$. Purely by way of example, the threshold value $\Delta v$ may lie within the range of 30 - 50 km/h and may preferably be approximately 40 km/h. By using a threshold value $\Delta v$ in the aforementioned range, an appropriate speed reduction is obtained which will reduce the risks of a forward collision, should a forward collision be imminent. Moreover, by using the above range for the threshold value $\Delta v$, the risk of being hit from behind during an unnecessary speed reduction of the hosting vehicle 10 is kept appropriately low.

Since the autonomous braking of the vehicle 10 is terminated when the speed reduction has reached the above threshold value Δv, the consequences of an inadvertently initiated autonomous braking of the vehicle 10 is reduced as compared to prior art systems and/or methods. Moreover, the autonomous braking of the vehicle 10 resulting in a limited speed reduction - and hence during a limited time - will also draw the driver's attention to the fact that the system 26 has identified a possibly critical traffic situation and after the termination of the autonomous braking, the driver should be prepared to take further measures to avoid a possibly critical traffic situation, if such a situation still exists.

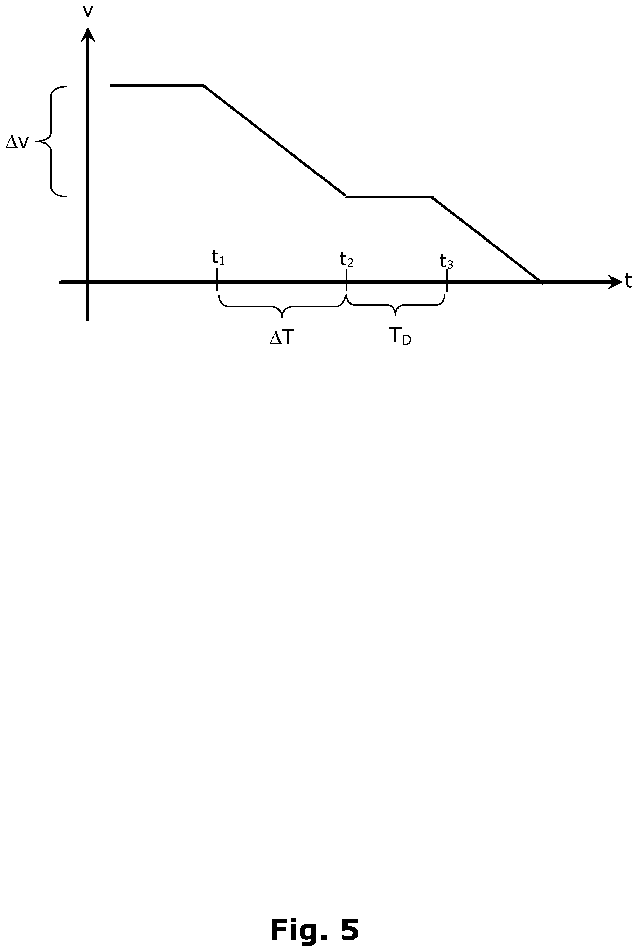

Fig. 5 illustrates another embodiment of the method of the invention. As may be gleaned from Fig. 5, the first steps of the Fig. 5 embodiment are similar to the ones of the Fig. 4 method. However, when the autonomous braking of the vehicle 10 has been terminated at a second time instant $t_2$, the Fig. 5 embodiment comprises a method step of determining if the collision risk is reduced to a level below a predetermined limit after the collision risk reduction task has been terminated.

One way of determining if the collision risk is reduced to a level below a predetermined limit is to determine if the speed of the vehicle 10 has been reduced to a value below a predetermined speed limit. This speed limit is preferably low, usually below 5 km/h and in the Fig. 5 embodiment the speed limit has been set to 0 km/h.

Instead of, or in addition to, using the aforesaid predetermined speed limit when determining whether the collision risk is reduced or not, a threat assessment using at least one of the above discussed braking threat number BTN and/or a steering threat number STN may be used.

Purely by way of example, a threat assessment may comprise a step of determining that a collision risk is reduced to a level below a predetermined limit when the braking threat number BTN is lower than a predetermined value, which value may preferably be approximately 0.05.

Other implementations of the above threat assessment may comprise a step of determining that a collision risk is reduced to a level below a predetermined limit when each one of the braking threat number BTN and the steering threat number STN is lower than a predetermined value, which value may preferably be approximately 0.05.

Since the vehicle 10 has not reached a standstill at the second time instant $t_2$, the Fig. 5 embodiment of the inventive method waits, or pauses, for a predetermined delay time $T_D$. Then, the method initiates a risk reduction procedure, for instance a method comprising the steps previously discussed in conjunction with Fig. 4. These steps result in a new autonomous braking of the vehicle 10 starting at a third time instant $t_3$. In the Fig. 5 example, the second autonomous braking results in the vehicle 10 reaching a standstill, but if the vehicle 10 would still have a non-zero speed after the second autonomous braking, the steps of waiting and initiating a risk reduction procedure are preferably continuously performed until a non-zero speed of the vehicle 10 has been obtained.

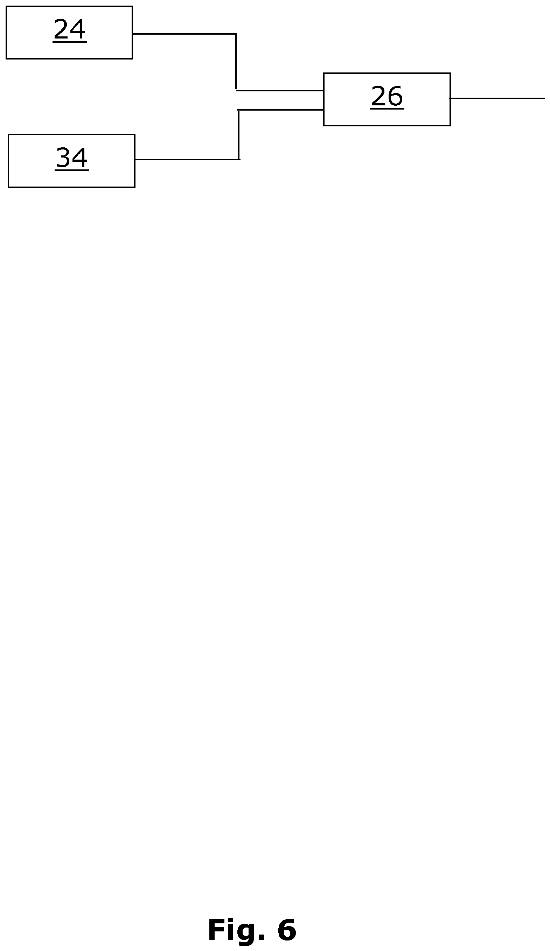

Instead of, or in addition to, the above methods of reducing the risk of a forward collision between the vehicle 10 and a foreign object 28, Fig. 6 schematically illustrates another embodiment of the present invention. The Fig. 6 embodiment may preferably be used in combination with a collision risk reduction method which utilizes the above discussed predetermined speed threshold value concept and/or the concept of waiting for a predetermined delay time. However, the Fig. 6 embodiment may also be used in a collision risk reduction method which uses neither of these two concepts.

The Fig. 6 embodiment comprises a method step of establishing the presence of a foreign object 28 in front of the vehicle 10, preferably using information from the sensor 24. However, the Fig. 6 embodiment also uses information from the brake control unit 34 in order to determine if there is a need for initiating a collision risk reduction task, e.g. autonomous braking of the vehicle 10. As such, if it can be concluded from the brake control unit 34 that the driver of the vehicle requests a deceleration of the vehicle 10 at the same time as the sensor 24 provides information that there is a foreign object 28 in front of the vehicle 10, these two facts constitute an indication that the vehicle 10 is approaching a traffic situation which is generally desired to avoid.

In order to avoid the upcoming traffic situation, the Fig. 6 embodiment comprises a step of determining a required deceleration $dec_{req}$ of the vehicle. Examples of how the required deceleration $dec_{req}$ may be determined are presented hereinbelow.

As a first example, the deceleration $dec_{driver}$ requested by the driver may be compared to a predetermined deceleration threshold value $dec_{thres}$. Purely by way of example, the deceleration threshold value $dec_{thres}$ may be set to be a predetermined trigger level factor TL times a risk reduction deceleration $dec_{riskred}$, i.e. :

$$dec_{thres} = TL \cdot dec_{riskred} \qquad \text{(Eq. 7)}$$

wherein the value of the risk reduction deceleration $dec_{riskred}$ is an estimate of the deceleration needed in order reduce, and preferable remove, the risk of a collision between the vehicle 10 and the foreign object 28. The trigger level factor TL is preferably set to a value within the range of 0 to 1. Purely by way of example, the trigger level factor TL may be set a value within the range of 0.2 to 0.4 and the trigger level factor TL may in some implementations be set to a value of approximately 0.3.

If it is concluded from the above comparison that the deceleration $dec_{driver}$ requested by the driver exceeds the predetermined deceleration threshold value $dec_{thres}$, i.e. :

$$dec_{driver} \geq dec_{thres} = TL \cdot dec_{riskred} \qquad \text{(Eq. 8)}$$

the deceleration $dec_{driver}$ requested by the driver is modified by a modification function in order to obtain a new requested deceleration. Purely by way of example, the modification function may comprise an operation of a multiplication by a gain factor g which is greater than one:

$$dec_{driver,gain} = g \cdot dec_{driver} \qquad \text{(Eq. 9)}$$

The requested deceleration $dec_{driver,gain}$, which may have been modified for instance in accordance with Eq. 9, is then used together with the previously determined risk reduction deceleration $dec_{riskred}$ in order to determine the required deceleration $dec_{req}$ for the vehicle 10, preferably by utilizing a deceleration function, for instance a minimum function determining the minimum of the requested deceleration $dec_{driver,gain}$ and the risk reduction deceleration $dec_{riskred}$, i.e.

$$dec_{req} = \min\left(dec_{driver,gain}, dec_{riskred}\right) \qquad \text{(Eq. 10)}$$

Since the required deceleration $dec_{req}$, determined in accordance with Eq. 10, is based on input from the brake control unit 34 - namely input as regards the requested deceleration $dec_{driver}$ - as well as input from the system 26, e.g. the sensor 24 of the system 26 - namely input as regards e.g. the risk reduction deceleration $dec_{riskred}$ - the risk of obtaining an incorrect, e.g. too high, required deceleration $dec_{req}$ is substantially reduced as compared to risk reduction methods and/or systems using only one input source. This reduced risk may be used in order to increase the previously discussed speed reduction threshold value. Purely by way of example, the speed reduction threshold value may - in comparison with methods and/or systems using only one input source -be increased to a value of less or equal to 50 km/h, preferably less or equal to 47 km/h.

It should be noted that the speed reduction threshold value only yields for the portion of the risk reduction deceleration $dec_{riskred}$ in excess of the deceleration initially required by the driver, e.g. without being modified by any gain factor g or similar. Consequently, the method as presented hereinabove always preferably ensures that the deceleration of the vehicle 10 never falls below the deceleration actually requested by the driver, e.g. by the actuation of the brake pedal of the vehicle 10.

While there have been shown and described and pointed out fundamental novel features of the invention as applied to a preferred embodiment thereof, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A method for reducing the risk of a forward collision between a vehicle (10) and a foreign object (28) in a forward collision risk reduction system (26), said method comprising the steps of:

   - establishing the presence of said foreign object (28) in front of said vehicle (10);
   - initiating a collision risk reduction task resulting in a speed reduction of said vehicle (10), and

- terminating said collision risk reduction task when said speed reduction exceeds a predetermined threshold value ($\Delta v$).

2. The method according to claim 1, wherein said method further comprises the steps of:

- determining if a driver of said vehicle (10) requests a deceleration ($dec_{driver}$) of said vehicle (10), and
- if yes, determining a required deceleration of said vehicle (10).

3. The method according to claim 2, wherein said step of determining a required deceleration ($dec_{req}$) of said vehicle (10) further comprises the steps of:

- determining if said requested deceleration ($dec_{driver}$) exceeds a deceleration threshold value ($dec_{thres}$), and
- if yes, modifying said requested deceleration ($dec_{driver}$) by a modification function (g) in order to obtain a new requested deceleration ($dec_{driver,gain}$).

4. The method according to claim 3, wherein said deceleration threshold value ($dec_{thres}$) is set to be a predetermined trigger level factor (TL) times a risk reduction deceleration ($dec_{riskred}$), wherein the value of said risk reduction deceleration ($dec_{riskred}$) is an estimate of the deceleration needed in order remove the risk of a collision between the vehicle (10) and the foreign object (28).

5. The method according to claim 3 or 4, wherein said modification function comprises an operation of a multiplication by a gain factor (g).

6. The method according to any one of claims 4 to 5, wherein said required deceleration ($dec_{req}$) is determined by the following step:

- determining said required deceleration ($dec_{req}$) by using a deceleration function in which said requested deceleration ($dec_{driver,gain}$) and said risk reduction deceleration ($dec_{riskred}$) are inputs.

7. The method according to claim 6, wherein said deceleration function comprises an operation of determining the minimum of said requested deceleration ($dec_{driver,gain}$) and said risk reduction deceleration ($dec_{riskred}$).

8. The method according to any one of the preceding claims, wherein said method further comprises the steps of:

- determining if said risk is reduced to a level below a predetermined limit after the collision risk reduction task has been terminated;

  ∘ if not, waiting for a predetermined delay time ($T_D$), and
  ∘ initiating a risk reduction method according to any one of the preceding claims.

9. The method according to any one of claim 2 to 8, wherein said predetermined threshold value ($\Delta v$) is less than or equal to 50 km/h, preferably less than or equal to 47 km/h.

10. The method according to any one of the preceding claims, wherein said predetermined threshold value ($\Delta v$) is less than or equal to 40 km/h.

11. Computer program product, **characterized in that** it comprises a computer program containing computer program code executable in a computer or a processor to implement all the steps of a method according to any one of the preceding claims, said product being stored on a computer-readable medium or transportable through a carrier wave.

12. Electronic control unit (ECU), **characterized in that** it comprises a computer program product according to claim 11 and arranged to execute a method according to any one of claims 1 -10.

13. An automotive vehicle forward collision risk reduction system (26), **characterized in that** system comprises an electronic control unit (ECU) according to claim 12.

14. An automotive vehicle (10), **characterized in that** system comprises an automotive vehicle forward collision risk reduction system (26) according to claim 13.

**15.** A method of upgrading an automotive vehicle forward collision risk reduction system (26) by executing the computer program product of claim 11.

**Patentansprüche**

**1.** Verfahren zum Verringern des Risikos einer Frontalkollision zwischen einem Fahrzeug (10) und einem fremden Gegenstand (28) in einem System (26) zum Verringern des Risikos einer Frontalkollision, wobei das Verfahren die folgenden Schritte umfasst:

- Einrichten der Anwesenheit des fremden Gegenstands (28) vor dem Fahrzeug (10);
- Starten eines Kollisionsrisikoverringerungsauftrags, der eine Geschwindigkeitsverringerung des Fahrzeugs (10) zur Folge hat, und
- Beenden des Kollisionsrisikoverringerungsauftrags, dann, wenn die Geschwindigkeitsverringerung einen vorgegebenen Schwellenwert ($\Delta v$) überschreitet.

**2.** Verfahren nach Anspruch 1, wobei das Verfahren ferner die folgenden Schritte umfasst:

- Bestimmen, ob ein Fahrer des Fahrzeugs (10) eine Verzögerung ($dec_{driver}$) des Fahrzeugs (10) anfordert; und
- wenn ja, Bestimmen einer erforderlichen Verzögerung des Fahrzeugs (10).

**3.** Verfahren nach Anspruch 2, wobei der Schritt des Bestimmens einer erforderlichen Verzögerung ($dec_{req}$) des Fahrzeugs (10) ferner die folgenden Schritte umfasst:

- Bestimmen, ob die angeforderte Verzögerung ($dec_{driver}$) einen Verzögerungsschwellenwert ($dec_{thres}$) überschreitet, und
- wenn ja, Ändern der angeforderten Verzögerung ($dec_{driver}$) durch eine Änderungsfunktion (g), um eine neue angeforderte Verzögerung ($dec_{driver,gain}$) zu erhalten.

**4.** Verfahren nach Anspruch 3, wobei der Verzögerungsschwellenwert ($dec_{thres}$) derart eingestellt ist, dass er ein vorgegebener Auslösestufenfaktor (TL) mal eine Risikoverringerungsverzögerung ($dec_{riskred}$) ist, wobei der Wert der Risikoverringerungsverzögerung ($dec_{riskred}$) ein Schätzwert der Verzögerung ist, die benötigt wird, um das Risiko einer Kollision zwischen dem Fahrzeug (10) und dem fremden Gegenstand (28) zu beseitigen.

**5.** Verfahren nach Anspruch 3 oder 4, wobei die Änderungsfunktion einen Vorgang einer Multiplikation mit einem Verstärkungsfaktor (g) umfasst.

**6.** Verfahren nach einem der Ansprüche 4 bis 5, wobei die erforderliche Verzögerung ($dec_{req}$) durch den folgenden Schritt bestimmt wird:

- Bestimmen der erforderlichen Verzögerung ($dec_{req}$) unter Verwendung einer Verzögerungsfunktion, bei der die angeforderte Verzögerung ($dec_{driver,gain}$) und die Risikoverringerungsverzögerung ($dec_{riskred}$) Eingänge sind.

**7.** Verfahren nach Anspruch 6, wobei die Verzögerungsfunktion einen Vorgang des Bestimmens des Minimums der angeforderten Verzögerung ($dec_{driver,gain}$) und der Risikoverringerungsverzögerung ($dec_{riskred}$) umfasst.

**8.** Verfahren nach einem der vorhergehenden Ansprüche, wobei das Verfahren ferner die folgenden Schritte umfasst:

- Bestimmen, ob das Risiko auf eine Stufe unter einem vorgegebenen Grenzwert verringert ist, nachdem der Kollisionsrisikoverringerungsauftrag beendet wurde;

  ◦ wenn nein, Warten für eine vorgegebene Wartezeit ($T_D$); und
  ◦ Starten eines Risikoverringerungsverfahrens nach einem der vorhergehenden Ansprüche.

**9.** Verfahren nach einem der Ansprüche 2 bis 8, wobei der vorgegebene Schwellenwert ($\Delta v$) kleiner oder gleich 50 km/h, vorzugsweise kleiner oder gleich 47 km/h ist.

**10.** Verfahren nach einem der vorhergehenden Ansprüche, wobei der vorgegebene Schwellenwert ($\Delta v$) kleiner oder

gleich 40 km/h ist.

11. Computerprogrammprodukt, **dadurch gekennzeichnet, dass** es ein Computerprogramm umfasst, das Computerprogrammcode enthält, der in einem Computer oder in einem Prozessor ausführbar ist, um alle Schritte eines Verfahrens nach einem der vorhergehenden Ansprüche zu implementieren, wobei das Produkt auf einem computerlesbaren Medium gespeichert oder durch eine Trägerwelle übertragbar ist.

12. Elektronische Steuereinheit (ECU), **dadurch gekennzeichnet, dass** sie ein Computerprogrammprodukt nach Anspruch 11 umfasst und ausgelegt ist, ein Verfahren nach einem der Ansprüche 1-10 auszuführen.

13. System (26) zum Verringern des Risikos einer Frontalkollision eines Kraftfahrzeugs, **dadurch gekennzeichnet, dass** das System eine elektronische Steuereinheit (ECU) nach Anspruch 12 umfasst.

14. Kraftfahrzeug (10), **dadurch gekennzeichnet, dass** das System ein System (26) zum Verringern des Risikos einer Frontalkollision eines Kraftfahrzeugs nach Anspruch 13 umfasst.

15. Verfahren zum Aufrüsten eines Systems (26) zum Verringern des Risikos einer Frontalkollision eines Kraftfahrzeugs durch Ausführen des Computerprogrammprodukts nach Anspruch 11.

## Revendications

1. Procédé de réduction du risque d'une collision frontale entre un véhicule (10) et un objet étranger (28) dans un système de réduction de risque de collision frontale (26), ledit procédé comprenant les étapes suivantes :

   - l'établissement de la présence dudit objet étranger (28) devant ledit véhicule (10) ;
   - le lancement d'une tâche de réduction de risque de collision résultant en une réduction de vitesse dudit véhicule (10), et
   - l'arrêt de ladite tâche de réduction de risque de collision quand ladite réduction de vitesse dépasse une valeur limite prédéterminée ($\Delta v$).

2. Procédé selon la revendication 1, ledit procédé comprenant en outre les étapes suivantes :

   - la détermination qu'un conducteur dudit véhicule (10) demande ou non une décélération ($déc_{conducteur}$) dudit véhicule (10), et
   - dans l'affirmative, la détermination d'une décélération requise dudit véhicule (10).

3. Procédé selon la revendication 2, dans lequel ladite étape de détermination d'une décélération requise ($déc_{req}$) dudit véhicule (10) comprend en outre les étapes suivantes :

   - la détermination que ladite décélération demandée ($déc_{conducteur}$) dépasse ou non une valeur limite de décélération ($déc_{lim}$), et
   - dans l'affirmative, la modification de ladite décélération demandée ($déc_{conducteur}$) par une fonction de modification (g) afin d'obtenir une nouvelle décélération demandée ($déc_{conducteur,gain}$).

4. Procédé selon la revendication 3, dans lequel ladite valeur limite de décélération ($déc_{lim}$) est réglée pour être un facteur de niveau de déclenchement prédéterminé (TL) fois une décélération de réduction de risque ($dec_{rédrisque}$), dans lequel la valeur de ladite décélération de réduction de risque ($déc_{rédrisque}$) est une estimation de la décélération nécessaire pour supprimer le risque de collision entre le véhicule (10) et l'objet étranger (28).

5. Procédé selon la revendication 3 ou 4, dans lequel ladite fonction de modification comprend une opération de multiplication par un facteur de gain (g).

6. Procédé selon l'une quelconque des revendications 4 à 5, dans lequel ladite décélération requise ($déc_{req}$) est déterminée par l'étape suivante :

   - la détermination de ladite décélération requise ($déc_{req}$) en utilisant une fonction de décélération dans laquelle ladite décélération demandée ($déc_{conducteur,gain}$) et ladite décélération de réduction de risque ($déc_{rédrisque}$) sont des entrées.

7. Procédé selon la revendication 6, dans lequel ladite fonction de décélération comprend une opération de détermination du minimum de ladite décélération demandée (déc$_{conducteur,gain}$) et de ladite décélération de réduction de risque (déc$_{rédrisque}$).

8. Procédé selon l'une quelconque des revendications précédentes, ledit procédé comprenant en outre les étapes suivantes :

   - la détermination que ledit risque est réduit ou non à un niveau inférieur à une limite prédéterminée après l'arrêt de la tâche de réduction de risque de collision ;

      ◦ dans la négative, l'attente pendant un temps de retard prédéterminé (T$_D$), et
      ◦ le lancement d'un procédé de réduction de risque selon l'une quelconque des revendications précédentes.

9. Procédé selon l'une quelconque des revendications 2 à 8, dans lequel ladite valeur limite prédéterminée (∆v) est inférieure ou égale à 50 km/h, de préférence inférieure ou égale à 47 km/h.

10. Procédé selon l'une quelconque des revendications précédentes, dans lequel ladite valeur limite prédéterminée (∆v) est inférieure ou égale à 40 km/h.

11. Produit de programme informatique, **caractérisé en ce qu'**il comprend un programme informatique contenant un code de programme informatique exécutable dans un ordinateur ou un processeur pour mettre en oeuvre toutes les étapes d'un procédé selon l'une quelconque des revendications précédentes, ledit produit étant mémorisé sur un support lisible par ordinateur ou étant transportable par le biais d'une onde porteuse.

12. Unité de commande électronique (ECU), **caractérisée en ce qu'**elle comprend un produit de programme informatique selon la revendication 11 et agencée pour exécuter un procédé selon l'une quelconque des revendications 1 à 10.

13. Système de réduction de risque de collision frontale pour véhicule automobile (26), **caractérisé en ce que** le système comprend une unité de commande électronique (ECU) selon la revendication 12.

14. Véhicule automobile (10), **caractérisé en ce que** le système comprend un système de réduction de risque de collision frontale pour véhicule automobile (26) selon la revendication 13.

15. Procédé d'amélioration d'un système de réduction de risque de collision frontale pour véhicule automobile (26) en exécutant le produit de programme informatique selon la revendication 11.

**Fig. 1**

**Fig. 2**

**Fig. 3**

**Fig. 4**

**Fig. 5**

**Fig. 6**

**EP 2 388 757 B1**

**REFERENCES CITED IN THE DESCRIPTION**

**Patent documents cited in the description**

- US 2006097570 A1
- US 6473681 B1
- DE 102008045481 A1
- US 5492397 A